# EUROPEAN PATENT SPECIFICATION

(11) **EP 3 521 258 B1**
(45) Date of publication and mention of the grant of the patent: **26.05.2021**
(21) Application number: 17856082.7
(22) Date of filing: 26.09.2017
(51) Int. Cl.: C03C 27/06, E06B 3/663, E06B 3/677

(54) **METHOD FOR PRODUCING GLASS PANEL UNIT**
VERFAHREN ZUR HERSTELLUNG EINER GLASSCHEIBENEINHEIT
PROCÉDÉ DE PRODUCTION D'UNITÉ DE PANNEAU DE VERRE

(30) Priority: 30.09.2016 JP 2016194692
(43) Date of publication of application: 07.08.2019
(73) Proprietor: Panasonic Intellectual Property Management Co., Ltd., Osaka-shi, Osaka 540-6207 (JP)
(72) Inventor: ISHIBASHI, Tasuku, Osaka-shi, Osaka 540-6207 (JP); URIU, Eiichi, Osaka-shi, Osaka 540-6207 (JP); HASEGAWA, Kazuya, Osaka-shi, Osaka 540-6207 (JP); NONAKA, Masataka, Osaka-shi, Osaka 540-6207 (JP); ABE, Hiroyuki, Osaka-shi, Osaka 540-6207 (JP)
(74) Representative: Müller-Boré & Partner Patentanwälte PartG mbB
(86) International application number: PCT/JP2017/034649
(87) International publication number: WO 2018/062131

(56) References cited:
- EP-A1- 1 298 102
- WO-A1-2016/147604
- WO-A1-2016/147604
- JP-A- H11 209 149
- JP-A- 2002 167 249
- JP-A- 2002 255 591
- JP-A- 2002 326 843
- JP-A- 2002 326 843
- JP-A- 2003 306 353
- JP-A- 2003 510 238

## Description

### Technical Field

This invention relates generally to a glass panel unit manufacturing method for a glass panel unit where an inner space reduced in pressure is formed between a pair of panels.

### Background Art

The patent Literature documents below disclose: bonding, with a frame-shaped seal, periphery parts of a first glass panel (first substrate) and a second glass panel (second substrate) to each other to form an inner space; and exhausting air from the inner space to seal the inner space, thereby forming a glass panel unit.

In the above-mentioned glass panel unit, force is applied to the seal in a direction of pulling the seal into the inside, due to a pressure difference between the inner space reduced in pressure and the ambient atmosphere. If the seal is damaged by the force, it may lead to occurrence of a leak path and the reduced pressure state of the inner space may be accordingly destroyed.

### Citation List

### Paten Literature

Patent Literature : JP 2016-69232 A, JP 2002-326843, WO 2016/147604, EP 1 298 102.

### Summary of Invention

An object of the present invention is to provide a glass panel unit manufacturing method, which can suppress a reduced pressure state in an inner space of the glass panel unit from being destroyed.

A glass panel unit manufacturing method according to an aspect of the present invention includes a seal applying step, a bonding step, a pressure reducing step and a sealing step. The seal applying step is a step of applying a seal in a frame shape onto a periphery part of either or both of a first surface of a first substrate and a second surface of a second substrate. The first substrate includes at least a glass plate. The second substrate includes at least a glass plate. The first surface is one surface in a thickness direction of the first substrate. The second surface is one surface in a thickness direction of the second substrate. The bonding step performed after the seal applying step, the getter applying step and the pillar applying step is a step of hermetically bonding, with the seal, the first surface of the first substrate and the second surface of the second substrate to form an inner space surrounded with the first surface, the second surface and the seal other than an exhaust path capable of exhausting gas to an outside, such that the first surface and the second surface face each other with a prescribed interval. The pressure reducing step is a step of reducing a pressure in the inner space. The sealing step is a step of sealing the inner space while maintaining a reduced pressure in the inner space.

The seal includes a protruding portion, positioned outside of edges of the first surface of the first substrate and the second surface of the second substrate, in a state where the inner space has been formed. The protruding portion has a length, along the thickness directions of the first substrate and the second substrate, longer than the prescribed interval.

A glass panel unit manufactured according to an aspect of the present invention includes a first panel, a second panel, a frame body and a reduced pressure space. The first panel includes at least a glass plate, and has a first surface that is one surface in a thickness direction of the first panel. The second panel includes at least a glass plate, and has a second surface that is one surface in a thickness direction of the second panel. The second surface faces the first surface with a prescribed interval. The frame body is hermetically bonded to the first panel and the second panel. The reduced pressure space is surrounded with the first panel, the second panel and the frame body. The reduced pressure space is sealed in a reduced pressure state. The frame body includes a protruding portion positioned outside of edges of the first surface of the first panel and the second surface of the second panel. The protruding portion has a length, along the thickness directions of the first panel and the second panel, longer than the prescribed interval.

A glass window includes a panel manufactured according to the method of the present invention and a window frame fitted to a periphery part of the glass panel unit.

### Brief Description of Drawings

FIG. 1 is a schematic perspective view for explaining a manufacturing process, of a glass panel unit according to an Embodiment 1.
FIG. 2 is a schematic plane view for explaining the manufacturing process in a glass panel unit manufacturing method, of the glass panel unit.
FIG. 3 is a cross-sectional view taken along line A-A in FIG. 2.
FIG 4 is a schematic plane view, partially broken, of an assembly formed by the glass panel unit manufacturing method.
FIG. 5 is a schematic plane view of the glass panel unit formed by the glass panel unit manufacturing method.
FIG 6A is a cross-sectional view taken along line B-B in FIG. 5. FIG. 6B is a partially enlarged view of FIG. 6A.
FIG. 7A is an essential cross-sectional view for explaining a seal applying step of the glass panel unit manufacturing method. FIG 7B is an essential cross-sectional view of a first substrate and a second substrate formed by a bonding step of the glass panel unit manufacturing method. FIG. 7C is an essential cross-sectional view of a first substrate and a second substrate, for explaining a leak path in an exemplary pressure reducing step.

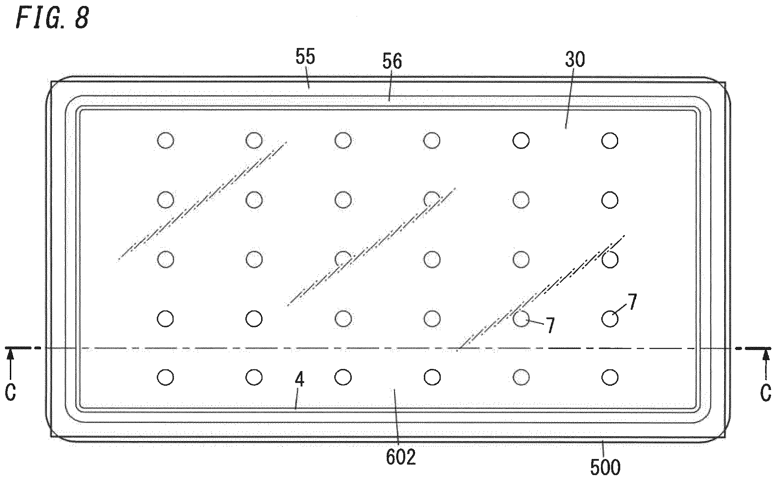

FIG. 8 is a schematic plane view of a glass panel unit according to an Embodiment 2.

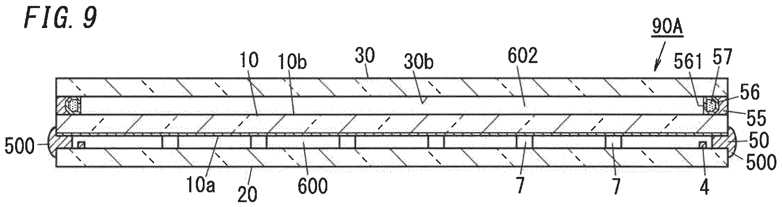

FIG 9 is a cross-sectional view taken along line C-C in FIG 8.
FIG. 10 is a schematic plane view of a glass window with the glass panel unit according to the Embodiment 1.

### Description of Embodiments

### (Embodiment 1)

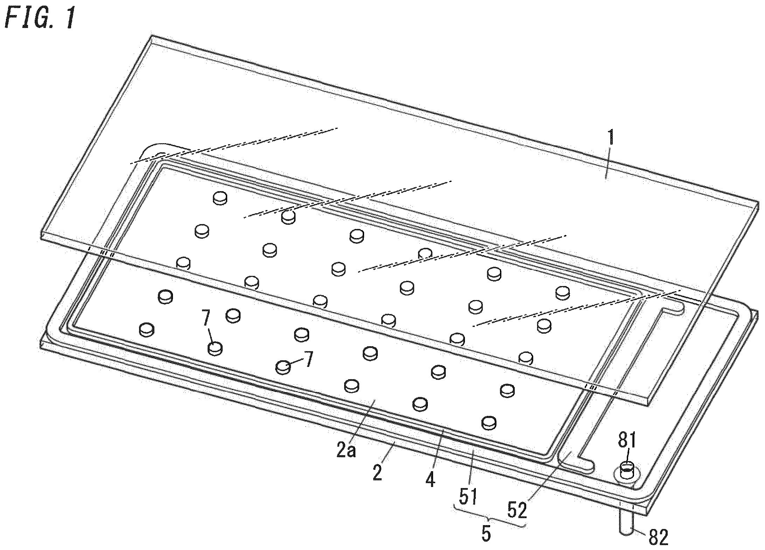

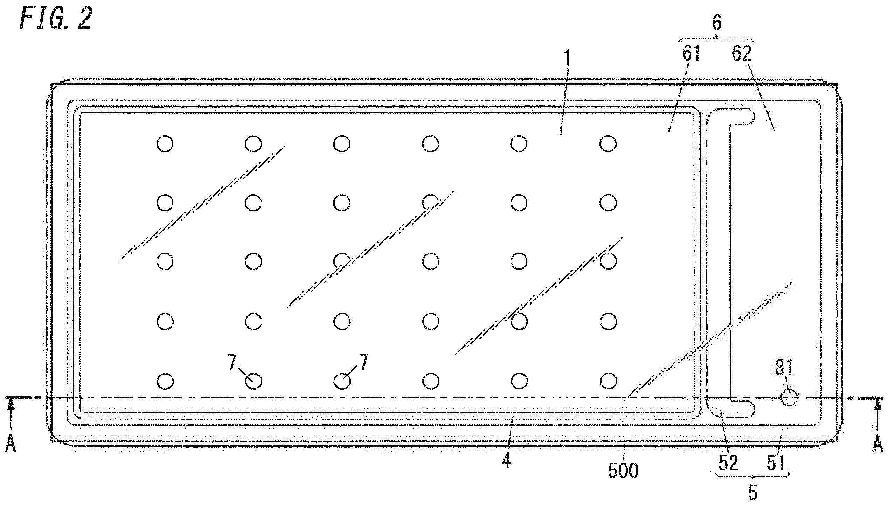

Hereinafter, a glass panel unit manufacturing method according to the Embodiment 1 will be explained with reference to FIGS. 1 to 7C.

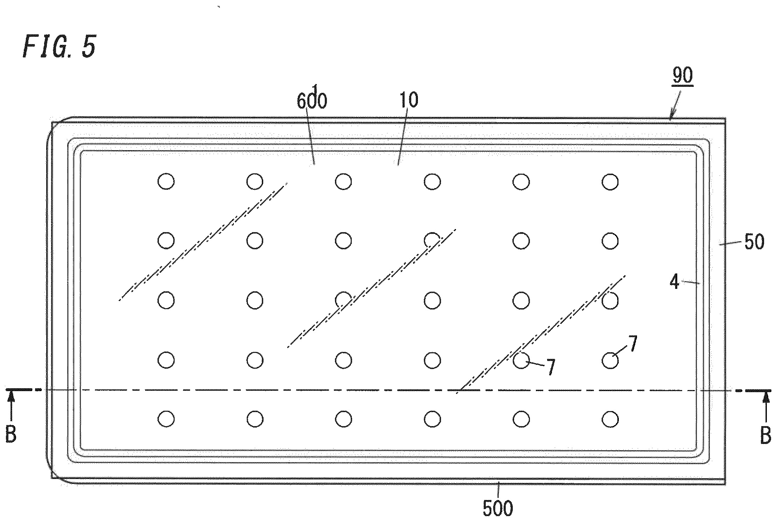

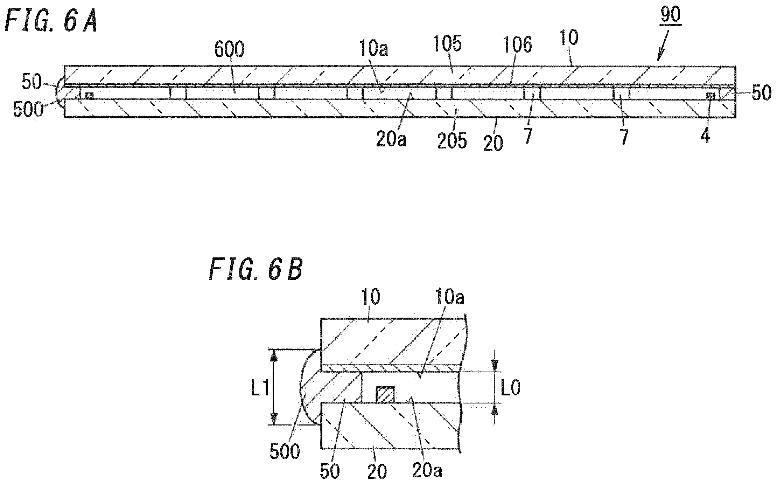

As shown in FIGS. 5, 6A and the like, a glass panel unit 90 includes a first panel 10, a second panel 20, a frame body 50, pillars 7 (a large number of pillars in this example) and a getter 4.

The first panel 10 includes a glass plate 105 with a flat plate shape and a coating 106 that covers a first side of the glass plate 105 in a thickness direction thereof. Examples of material of the glass plate 105 include soda lime glass, high strain point glass, chemically tempered glass, alkali-free glass, quartz glass, Neoceram, and thermally tempered glass.

The coating 106 is for example a heat-ray reflective film, but may be a film with any other physical characteristics. The first panel 10 may have an appropriate coating applied onto not the first side but a second side (i.e., an opposite side to the first side) in the thickness direction of the glass plate 105, or may have appropriate coatings applied onto both of the first and second sides in the thickness direction of the glass plate 105.

In the glass panel unit 90, the first panel 10 has a surface (hereinafter, referred to as a "first surface 10a"), constituted by a surface of the coating 106, on one of both sides in the thickness direction of the first panel 10. In case where the coating 106 is not provided on the glass plate 105, the first surface 10a of the first panel 10 may be constituted by a surface in the thickness direction, of the glass plate 105. The first panel 10 is not limited in particular as long as it includes at least the glass plate 105. The first panel 10 is transparent as a whole in this example, but may be semi-transparent or non-transparent.

The second panel 20 includes a glass plate 205 with a flat plate shape. The second panel 20 has a surface (hereinafter, referred to as a "second surface 20a"), constituted by a surface in the thickness direction of the glass plate 205, on one of both sides in the thickness direction of the second panel 20. The second panel 20 is not limited in particular as long as it includes at least the glass plate 205. The second panel 20 may have an appropriate coating applied onto either or both of sides in the thickness direction, of the glass plate 205. Examples of material of the glass plate 205 include soda lime glass, high strain point glass, chemically tempered glass, alkali-free glass, quartz glass, Neoceram, and thermally tempered glass. The second panel 20 is also transparent as a whole in this example, but may be semi-transparent or non-transparent.

As shown in FIG. 6B, the first surface 10a of the first panel 10 and the second surface 20a of the second panel 20 face each other with a prescribed interval L0.

The frame body 50 is formed by melting a glass frit to have a seal function. The frame body 50 is disposed between the first panel 10 and the second panel 20 facing each other with being sandwiched therebetween. The frame body 50 is bonded entirely and hermetically with respect to a periphery part of the first surface 10a of the first panel 10 and a periphery part of the second surface 20a of the second panel 20.

The frame body 50 includes a protruding portion 500 positioned outside of edges of the first surface 10a of the first panel 10 and the second surface 20a of the second panel 20. The protruding portion 500 has a length L1, along the thickness directions of the first panel 10 and the second panel 20, longer than the prescribed interval L0.

The glass panel unit 90 includes a reduced pressure space 600 surrounded with the first panel 10, the second panel 20 and the frame body 50. The reduced pressure space 600 is formed hermetically. The first surface 10a of the first panel 10 faces the reduced pressure space 600. The second surface 20a of the second panel 20 also faces the reduced pressure space 600.

The pillars 7 are disposed between the first panel 10 and the second panel 20 facing each other with being sandwiched therebetween. The pillars 7 are provided to be surrounded with the frame body 50. That is, the pillars 7 are located in the reduced pressure space 600. Each pillar 7 is in contact with the first surface 10a of the first panel 10 and the second surface 20a of the second panel 20, thereby maintaining an interval between the first panel 10 and the second panel 20 to the prescribed interval. In other words, the pillars 7 serve as spacers for maintaining the interval between the first panel 10 and the second panel 20 substantially constant.

FIGS. 1 to 6A and the like schematically show elements of the glass panel unit to help understand the glass panel unit, but the configurations of those elements (e.g., the number of the pillars 7, sizes thereof or shapes thereof) are not necessarily limited to the examples of the drawings. The glass panel unit can be appropriately modified in the material, size and shape of each pillar 7, an interval between adjacent pillars 7, or an arrangement pattern of the pillars 7, etc. Furthermore, the pillars 7 are not necessarily provided, and the glass panel unit may not include the pillars 7.

The getter 4 is disposed on the second surface 20a of the second panel 20 so as to be surrounded with the frame body 50 between the first panel 10 and the second panel 20 (that is, so as to be located in the reduced pressure space 600). The getter 4 is in non-contact with the first surface 10a of the first panel 10, thereby a gap being provided between the getter 4 and the first panel 10. The getter 4 has properties of absorbing gas such as nitrogen and oxygen.

Next, the glass panel unit manufacturing method (hereinafter merely referred to as the "manufacturing method") according to claim 1 will be explained in detail.

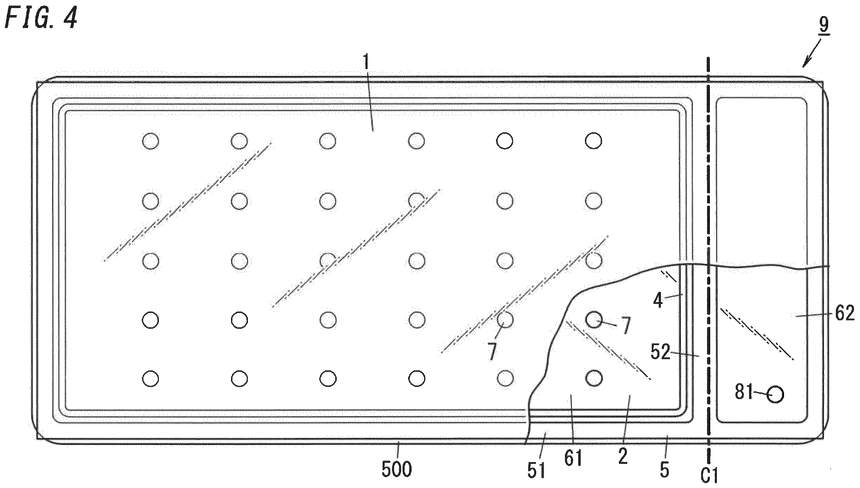

In the manufacturing method, as shown in FIG. 4, an assembly 9 is first formed, which includes a first space 61 reduced in pressure and a second space 62 hermetically partitioned from the first space 61, and then a portion containing the second space 62 is cut off. Accordingly, the glass panel unit 90 shown in FIGS. 5 and 6A can be obtained. The first space 61 reduced in pressure constitutes the reduced pressure space 600 of the glass panel unit 90.

The assembly 9 can be formed, using a first substrate 1, a second substrate 2, a seal 5, the pillars 7 and the getter 4.

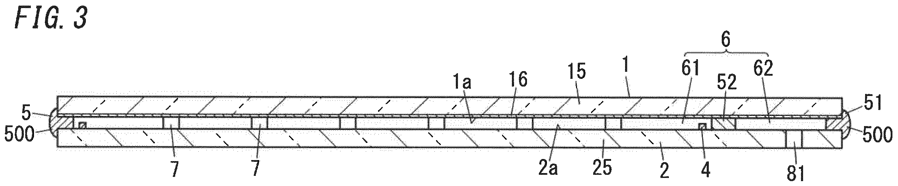

The first substrate 1 includes a glass plate 15 with a flat plate shape and a coating 16 that covers a first side of the glass plate 15 in a thickness direction thereof (refer to FIG. 3). In a cutting step described later, the first substrate 1 is partially cut off, thereby the first panel 10 being formed. More specifically, a first surface 1a of the first substrate 1 is cut, thereby the first surface 10a of the first panel 10 being formed. Also the glass plate 15 is partially cut off, thereby the glass plate 105 of the first panel 10 being formed, and the coating 16 is partially cut off, thereby the coating 106 of the first panel 10 being formed.

The second substrate 2 includes a glass plate 25 with a flat plate shape (refer to FIG. 3). In the cutting step, the second substrate 2 (glass plate 25) is partially cut off, thereby the second panel 20 (glass plate 205) being formed. More specifically, a second surface 2a of the second substrate 2 is cut, thereby the second surface 20a of the second panel 20 being formed.

The seal 5 includes an outer circumferential part 51 with a frame-shape and a partition part 52 that partitions an inner space of the outer circumferential part 51 into two spaces (refer to FIG. 4). The seal 5 is cut off along the partition part 52, thereby the frame body 50 being formed.

Hereinafter, the manufacturing method will be explained in more detail.

The manufacturing method includes a seal applying step, a getter applying step, a pillar mounting step, a bonding step, a pressure reducing step, a sealing step and the cutting step, the bonding step being performed after the seal applying step, the getter applying step and the pillar applying step.

The assembly 9 is obtained as a result of the seal applying step, the getter applying step, the pillar mounting step, the bonding step, the pressure reducing step and the sealing step. The glass panel unit 90 is obtained as a result of the cutting step.

The step order of the seal applying step, the getter applying step and the pillar mounting step is not limited in particular. Any one of those may be first carried out and the remaining steps may be sequentially performed. Alternatively all of those may be performed at almost the same time.

First, the seal applying step will be explained.

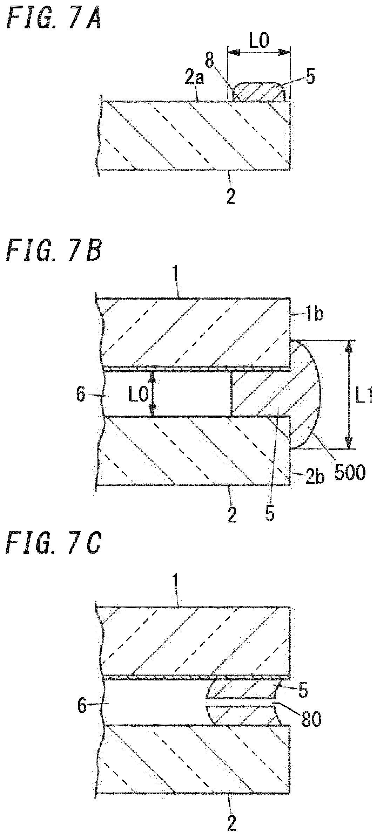

As shown in FIG. 7A, in the seal applying step, the seal 5 (the outer circumferential part 51 and the partition part 52) is applied, in a frame-shape, onto the periphery part of the second surface 2a on one of both sides in the thickness direction, of the second substrate 2 (refer to FIG. 1 and so on). Note that, the seal 5 is made of a glass frit with a low-melting point. By application of the seal 5, a gap is formed between the outer circumferential part 51 and the partition part 52 of the seal 5 at this time. The seal 5 may be applied onto the first surface 1a of the first substrate 1 instead of the second surface 2a, or onto both of the first surface la of the first substrate 1 and the second surface 2a of the second substrate 2 (e.g., the outer circumferential part 51 may be applied to the first substrate 1, but the partition part 52 may be applied to the second substrate 2). As described later, the respective outer circumferential part 51 and partition part 52 are provided to be melted at temperatures different from each other.

In the seal applying step, the seal 5 is applied onto, as the periphery part, a region 8 between an edge of the second surface 2a and a line position away inward from the edge by a distance equal to the prescribed interval L0. In this manner, since the seal 5 is applied close to the edge of the second surface 2a, the protruding portion 500 can be easily and suitably formed in the following bonding step.

Next, the getter applying step will be explained.

In the getter applying step, a paste-like material for forming the getter 4 is applied, in a linear shape (frame shape), onto the second surface 2a of the second substrate 2. More specifically, the paste-like material for forming the getter 4 is applied onto a part of the first side partitioned by the partition part 52, of the region surrounded with the outer circumferential part 51.

The material for the getter 4 may be a mixture in which a powdered adsorbent and a solvent are mixed at a proper concentration. For example, the powdered adsorbent may be Fe-V-Zr alloy powder, and the solvent may be isopropyl alcohol. In this case, the mixture ratio of the powdered adsorbent may be 10%, for example. In this manner, the adsorbent is changed into a solution.

Next, the pillar mounting step will be explained.

In the pillar mounting step, the pillars 7 are mounted, according to a prescribed pattern, onto the second surface 2a of the second substrate 2. More specifically, the pillars 7 are mounted onto a part of the first side partitioned by the partition part 52 (i.e., the same side on which the getter 4 is applied), of the region surrounded with the outer circumferential part 51.

By completion of the seal applying step, the getter applying step and the pillar mounting step, the seal 5 (the outer circumferential part 51 and the partition part 52), the getter 4 and the pillars 7 are disposed on the second surface 2a of the second substrate 2, as shown in FIG. 1. The second substrate 2 is provided with an exhaust port 81. The exhaust port 81 penetrates the second substrate 2 in the thickness direction thereof. The exhaust port 81 is opened in a part of the second side partitioned by the partition part 52 (i.e., the opposite side to the first side on which the getter 4 and the pillars 7 are located), of the region surrounded with the outer circumferential part 51, of the second surface 2a.

Next, the bonding step will be explained. The bonding step is performed after the seal applying step, the getter applying step and the pillar mounting step.

In the bonding step, the first substrate 1 and the second substrate 2 are set with sandwiching the seal 5 and the pillars 7, and the whole is heated in a sealing furnace.

In the bonding step, the inner temperature in the sealing furnace is set into a prescribed temperature (first melting temperature) equal to or more than a softening point of the outer circumferential part 51. Once the outer circumferential part 51 is melted in the sealing furnace at the first melting temperature, the first substrate 1 and the second substrate 2 are hermetically bonded to each other with the outer circumferential part 51. At this time, the partition part 52 is however kept without melting.

An inner space 6 is formed between the first substrate 1 and the second substrate 2 bonded to each other. The inner space 6 is hermetically surrounded with the first substrate 1, the second substrate 2 and the outer circumferential part 51 other than an exhaust path capable of exhausting gas to the outside. The inner space 6 is partitioned into the first space 61 and the second space 62 by the partition part 52. Upon completion of the bonding step, the first space 61 and the second space 62 are communicated with each other.

The first space 61 is on one side, where the getter 4 and the pillars 7 are located. The second space 62 is on the other side, communicated with the exhaust port 81. The exhaust port 81 is to make the second space 62 communicate with the outside.

As shown in FIG. 7B, the seal 5 includes the protruding portion 500, positioned outside of an edge of the second surface 2a of the second substrate 2, in a state where the inner space 6 has been formed. The protruding portion 500 has the length L1, along the thickness directions of the first substrate 1 and the second substrate 2, longer than the prescribed interval L0.

Next, the pressure reducing step will be explained. The pressure reducing step is performed after the bonding step.

In the pressure reducing step, air in the inner space 6 is exhausted from the exhaust port 81 to the outside, thereby the whole pressure in the inner space 6 being reduced to a prescribed degree of vacuum (e.g., a degree of vacuum of 0.1 Pa or less).

A work in exhausting the air from the exhaust port 81 is carried out, using for example a vacuum pump via an exhaust pipe 82 (refer to FIG. 1) connected to the second substrate 2 to be communicated with the exhaust port 81. A gas in the second space 62 can be exhausted from the exhaust port 81 to the outside, and therefore, the exhaust port 81 corresponds to the exhaust path capable of exhausting the gas to the outside. A gas in the first space 61 can be exhausted from: the gap between the outer circumferential part 51 and the partition part 52; the second space 62; and the exhaust port 81 to the outside, and therefore those also correspond to the exhaust path capable of exhausting the gas to the outside.

The seal 5 includes the protruding portion 500 as above. Accordingly, the protruding portion 500 is in contact with the an edge face 1b of the first substrate 1 and an edge face 2b of the second substrate 2, and the seal 5 can be therefore suppressed from being pulled into the inner space 6. Thus, the seal 5 is hardly pulled into the inner space 6 and a leak path 80 is hardly formed, unlike the case of FIG. 7C without the protruding portion 500, and the reduced pressure state of the inner space 6 can be therefore suppressed from being destroyed.

Next, the sealing step will be explained. The sealing step is performed after the pressure reducing step.

In the sealing step, the partition part 52 is melted at a prescribed temperature (second melting temperature) equal to or more than a softening point of the partition part 52 while maintaining the reduced pressure in the inner space 6. Accordingly, the partition part 52 is deformed to close the gap between the outer circumferential part 51 and the partition part 52 (refer to FIG. 4). In this manner, the first space 61 reduced in pressure is surrounded over the circumference thereof with the outer circumferential part 51 and the partition part 52, thereby being hermetically enclosed such that the first space 61 and the outside are not communicated with each other. The partition part 52 deformed serves as a partition wall for hermetically partitioning the inner space 6 reduced in pressure into the first space 61 and the second space 62.

The materials of the partition part 52 and the outer circumferential part 51 are determined such that the second melting temperature is higher than the first melting temperature. Thus, when the first substrate 1 and the second substrate 2 are bonded in the bonding step, the partition part 52 can be suppressed from deforming.

The assembly 9 with the first space 61 reduced in pressure can be obtained by carrying out the above-mentioned steps, as shown in FIG. 4.

Next, the cutting step will be explained. The cutting step is performed after the sealing step.

In the cutting step, the assembly 9 taken from the sealing furnace is cut along a cutting line C1 as a virtual line shown in FIG. 4 so as to be physically divided into two parts: a part having the first space 61; and a part having the second space 62. The cutting line C1 is preferably set to pass through the partition part 52 over the entire length thereof.

One of the divided parts, of the assembly 9, can be provided as the glass panel unit 90 with the reduced pressure space 600 (first space 61).

### (Variation)

In the glass panel unit 90, the exhaust port 81 is formed in the second substrate 2, but may be formed in at least one the first substrate 1 or the second substrate 2. In other words, the exhaust port 81 may be formed in the first substrate 1 instead of the second substrate 2, or respective exhaust ports 81 may be formed in both of the first substrate 1 and the second substrate 2.

In the manufacturing method, the inner space 6 is partitioned into the single first space 61 and the single second space 62, but partitioning of the inner space 6 is not limited to such an aspect. That is, the inner space 6 may be partitioned into a plurality of first spaces 61. In this case, a plurality of the glass panel units 90 can be obtained from the single assembly 9, the number of which is the same as that of the plurality of first spaces 61.

In the manufacturing method, the glass panel unit 90 is obtained by partially cutting the assembly 9, but the assembly 9 does not necessarily include the partition part 52. The glass panel unit 90 may be obtained, without cutting of the assembly 9, directly from the assembly 9 not including the partition part 52. In this case, the exhaust port 81 may be sealed by a proper method, and the inner space 6 surrounded with the outer circumferential part 51 may be set to the reduced pressure space 600 without dividing.

### (Glass Window)

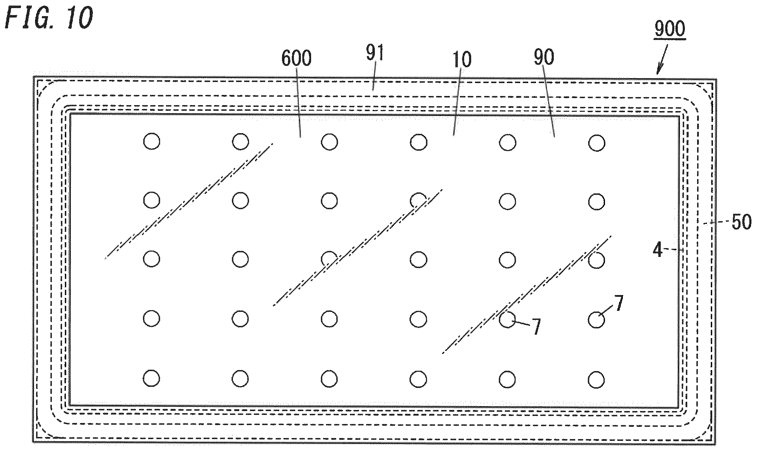

FIG. 10 shows a glass window 900 including the glass panel unit 90 according to the claim 1 and a window frame 91. The glass window 900 has a structure that the window frame 91 with a rectangular frame-shape is fitted to a periphery part of the glass panel unit 90 according to the Embodiment 1, thereby having high heat insulation.

Similarly, the window frame 91 may be fitted to the glass panel unit 90A according to the Embodiment 2. Also in this case, the glass window 900 with high heat insulation can be obtained.

### (Advantages)

As apparent from the foregoing embodiments, a glass panel unit manufacturing method according to a first aspect includes a seal applying step, a bonding step, a pressure reducing step and a sealing step.

The seal applying step is a step of applying a seal 5 in a frame shape onto a periphery part of either or both of a first surface 1a of a first substrate 1 and a second surface 2a of a second substrate 2. The first substrate 1 includes at least a glass plate 15. The second substrate 2 includes at least a glass plate 25. The first surface 1a is one surface in a thickness direction of the first substrate 1. The second surface 2a is one surface in a thickness direction of the second substrate 2.

The bonding step is a step of hermetically bonding, with the seal 5, the first surface 1a of the first substrate 1 and the second surface 2a of the second substrate 2 to form an inner space 6 surrounded with the first surface 1a, the second surface 2a and the seal 5 other than an exhaust path capable of exhausting gas to an outside, such that the first surface 1a and the second surface 2a face each other with a prescribed interval L0.

The pressure reducing step is a step of reducing a pressure in the inner space 6. The sealing step is a step of sealing the inner space 6 while maintaining a reduced pressure in the inner space 6.

The seal 5 includes a protruding portion 500, positioned outside of edges of the first surface 1a of the first substrate 1 and the second surface 2a of the second substrate 2, in a state where the inner space 6 has been formed. The protruding portion 500 has a length L1, along the thickness directions of the first substrate 1 and the second substrate 2, longer than the prescribed interval L0.

According to the glass panel unit manufacturing method of the first aspect, even if force is applied to the seal 5 in a direction of pulling a part of the seal 5 into the inside, due to a pressure difference between the inner space 6 enclosed in the reduced pressure state and the ambient atmosphere, since the protruding portion 500 is in contact with the edge face 1b of the first substrate 1 and the edge face 2b of the second substrate 2, the seal 5 can be therefore suppressed from being pulled to the inner space 6. Thus, the seal 5 is hardly pulled into the inner space 6 and the leak path 80 is hardly formed, and the reduced pressure state of the inner space 6 can be therefore suppressed from being destroyed.

In a glass panel unit manufacturing method according to a second aspect, which may be implemented in conjunction with the first aspect, in the seal applying step, applying the seal 5 onto, as the periphery part, a region 8 between: an edge of either or both of the first surface 1a and the second surface 2a; and a line position away inward from the edge by a distance equal to the prescribed interval L0.

According to the glass panel unit manufacturing method of the second aspect, the protruding portion 500 can be formed more easily.

A glass panel unit (90, 90A) according to a first aspect includes a first panel 10, a second panel 20, a frame body 50, a reduced pressure space 600 and a getter 4.

The first panel 10 includes at least a glass plate 105. The second panel 20 includes at least a glass plate 205. The first panel 10 has a first surface 1a that is one surface in a thickness direction of the first panel 10. The second panel 20 has a second surface 2a that is one surface in a thickness direction of the second panel 20. The second surface 2a faces the first surface 1a with a prescribed interval L0. The frame body 50 is hermetically bonded to the first panel 10 and the second panel 20. The reduced pressure space 600 is surrounded with the first panel 10, the second panel 20 and the frame body 50. The reduced pressure space 600 is sealed in a reduced pressure state.

The frame body 50 includes a protruding portion 500 positioned outside of edges of the first surface 1a of the first panel 10 and the second surface 2a of the second panel 20. The protruding portion 500 has a length L1, along the thickness directions of the first panel 10 and the second panel 20, longer than the prescribed interval L0.

According to the glass panel unit (90, 90A) of the first aspect, the part of the frame body 50 can be suppressed from being pulled, by the pressure difference between the reduced pressure space 600 and the ambient atmosphere, into the inside.

A glass panel unit 90A according to a second aspect, which may be implemented in conjunction with the first aspect, further includes a third panel 30, a second frame body 55 and a space 602 which are not part of the claimed invention.

The third panel 30 includes at least a glass plate. The third panel 30 faces one panel of the first panel 10 or the second panel 20. The second frame body 55 is hermetically bonded to the one panel and the third panel 30. The space 602 is provided between the one panel and the third panel 30 such that a dry gas is sealed therein.

According to the glass panel unit 90A of the second aspect, the space 602 for sealing the dry gas is provided in addition to the reduced pressure space 600. The glass panel unit 90A can therefore obtain higher heat insulation.

A glass window 900 according to a first aspect includes the glass panel unit (90, 90A) of the first or second aspect, and a window frame 91 fitted to a periphery part of the glass panel unit (90, 90A).

According to the glass window 900 of the first aspect, the reduced pressure space 600 is provided. The glass window 900 can therefore obtain high heat insulation, and the reduced pressure state of the reduced pressure space 600 can be suppressed from being destroyed.

The glass panel unit manufacturing method, the glass panel unit and the glass window with the same are not limited to the embodiments described above. The embodiments may be made various modifications based on designs or the like, and configuration of each embodiment may be applied appropriately in combination with that of any other embodiment.

### Reference Signs List

1 First Substrate
1a First Surface
15 Glass Plate
10 First Panel
105 Glass Plate
2 Second Substrate
2a Second Surface
25 Glass Plate
20 Second Panel
205 Glass Plate
30 Third Panel
5 Seal
50 Frame Body
500 Protruding Portion
55 Second Frame Body
6 Inner Space
600 Reduced Pressure Space
602 Space
8 Region
90 Glass Panel Unit
90A Glass Panel Unit
91 Window Frame
900 Glass Window
L0 Prescribed Interval
L1 Length

## Claims

1. A glass panel unit manufacturing method, comprising:
a seal applying step of applying a seal in a frame shape onto a periphery part of either or both of a first surface of a first substrate and a second surface of a second substrate, the first substrate including at least a glass plate, the second substrate including at least a glass plate, the first surface being one surface in a thickness direction of the first substrate, and the second surface being one surface in a thickness direction of the second substrate;
a getter applying step of applying a getter onto the second surface of the second substrate;
a pillar mounting step of mounting a pillar onto the second surface of the second substrate;
a bonding step of hermetically bonding, with the seal, the first surface of the first substrate and the second surface of the second substrate to form an inner space surrounded with the first surface, the second surface and the seal other than an exhaust path capable of exhausting gas to an outside, such that the first surface and the second surface face each other with a prescribed interval;
a pressure reducing step of reducing a pressure in the inner space; and
a sealing step of sealing the inner space while maintaining a reduced pressure in the inner space,
the bonding step being performed after the seal applying step, the getter applying step and the pillar mounting step,
in the bonding step, the first substrate and the second substrate being set with sandwiching the seal and the pillars, and heated in the sealing furnace,
the seal including a protruding portion, positioned outside of edges of the first surface of the first substrate and the second surface of the second substrate, in a state where the inner space has been formed, and
the protruding portion having a length, along the thickness directions of the first substrate and the second substrate, longer than the prescribed interval.

2. The glass panel unit manufacturing method of claim 1, wherein
in the seal applying step, applying the seal onto, as the periphery part, a region between:
an edge of either or both of the first surface and the second surface; and
a line position away inward from the edge by a distance equal to the prescribed interval.

## Patentansprüche

1. Glasscheibeneinheit-Herstellungsverfahren, umfassend:
einen Dichtungsaufbringungsschritt des Aufbringens einer Dichtung in einer Rahmenform auf einen Umfangsteil einer oder beider einer ersten Fläche bzw. Oberfläche eines ersten Substrats und einer zweiten Fläche bzw. Oberfläche eines zweiten Substrats, wobei das erste Substrat zumindest eine Glasplatte enthält, wobei das zweite Substrat zumindest eine Glasplatte enthält, wobei die erste Oberfläche eine Oberfläche in einer Dickenrichtung des ersten Substrats ist und die zweite Oberfläche eine Oberfläche in einer Dickenrichtung des zweiten Substrats ist;
einen Getteraufbringungsschritt des Aufbringens eines Getters auf die zweite Oberfläche des zweiten Substrats;
einen Säulenmontageschritt des Montierens einer Säule auf der zweiten Oberfläche des zweiten Substrats;
einen Verbindungsschritt des hermetischen Verbindens, mit der Dichtung, der ersten Oberfläche des ersten Substrats und der zweiten Oberfläche des zweiten Substrats, um einen Innenraum zu bilden, der mit bzw. von der ersten Oberfläche, der zweiten Oberfläche und der Dichtung umgeben ist, anders als ein bzw. außer einem Auslassweg, der in der Lage, Gas nach außen abzulassen, so dass die erste Oberfläche und die zweite Oberfläche in einem vorgeschriebenen Intervall einander zugewandt sind;
einen Druckverringerungsschritt des Verringerns eines Drucks in dem Innenraum; und
einen Abdichtungsschritt des Abdichtens des Innenraums unter Beibehaltung eines verringerten Drucks in dem Innenraum,
wobei der Verbindungsschritt nach dem Dichtungsaufbringungsschritt, dem Getteraufbringungsschritt und dem Säulenmontageschritt durchgeführt wird,
wobei in dem Verbindungsschritt das erste Substrat und das zweite Substrat mit Dazwischenanordnung der Dichtung und der Säulen gesetzt bzw. festgelegt werden und in dem Dichtungs- bzw. Versiegelungsofen erhitzt werden;
wobei die Dichtung einen vorstehenden Abschnitt enthält, der außerhalb der Kanten der ersten Oberfläche des ersten Substrats und der zweiten Oberfläche des zweiten Substrats positioniert ist, und zwar in einem Zustand, in dem der Innenraum gebildet wurde, und
wobei der vorstehende Abschnitt eine Länge entlang der Dickenrichtungen des ersten Substrats und des zweiten Substrats aufweist, die länger als das vorgeschriebene Intervall ist.

2. Glasscheibeneinheit-Herstellungsverfahren nach Anspruch 1, wobei in dem Dichtungsaufbringungsschritt Aufbringen der Dichtung auf, als den Umfangsteil, einer Region zwischen:
einer Kante einer oder beider der ersten Oberfläche und der zweiten Oberfläche; und
einer Linienposition, die von der Kante um einen Abstand nach innen entfernt ist, der gleich dem vorgeschriebenen Intervall ist.

## Revendications

1. Procédé de fabrication d'une unité de panneau de verre, comprenant :
une étape d'application de joint consistant à appliquer un joint en forme de cadre sur une partie périphérique de l'une ou l'autre ou les deux d'une première surface d'un premier substrat et d'une seconde surface d'un second substrat, le premier substrat incluant au moins une plaque de verre, le second substrat incluant au moins une plaque de verre, la première surface étant une surface dans une direction d'épaisseur du premier substrat et la seconde surface étant une surface dans une direction d'épaisseur du second substrat ;
une étape d'application de sorbeur consistant à appliquer un sorbeur sur la seconde surface du second substrat ;
une étape de montage de colonne consistant à monter une colonne sur la seconde surface du second substrat ;
une étape d'assemblage consistant à assembler hermétiquement, avec le joint, la première surface du premier substrat et la seconde surface du second substrat pour former un espace interne entouré de la première surface, la seconde surface et le joint autre qu'un trajet d'échappement capable de laisser s'échapper du gaz vers un extérieur, de sorte que la première surface et la seconde surface sont tournées l'une vers l'autre avec un intervalle prescrit ;
une étape de réduction de pression consistant à réduire une pression dans l'espace interne ; et
une étape d'étanchéification consistant à étanchéifier l'espace interne tout en maintenant une pression réduite dans l'espace interne,
l'étape d'assemblage étant réalisée après l'étape d'application de joint, l'étape d'application de sorbeur et l'étape de montage de colonne,
dans l'étape d'assemblage, le premier substrat et le second substrat étant posés avec la prise en sandwich du joint et des colonnes, et chauffés dans le four d'étanchéification,
le joint incluant une portion saillante, positionnée à l'extérieur de bords de la première surface du premier substrat et la seconde surface du second substrat,
dans un état où l'espace interne a été formé, et
la portion saillante ayant une longueur, le long des directions d'épaisseur du premier substrat et du second substrat, plus longue que l'intervalle prescrit.

2. Procédé de fabrication d'une unité de panneau de verre selon la revendication 1,
dans lequel
dans l'étape d'application de joint, appliquer le joint sur une région, en tant que partie périphérique, entre :
un bord de l'une ou l'autre ou les deux de la première surface et la seconde surface ; et
une position linéaire à l'écart vers l'intérieur du bord d'une distance égale à l'intervalle prescrit.
